(19) **Europäisches Patentamt / European Patent Office / Office européen des brevets**

(11) **EP 1 375 342 B1**

(12) # FASCICULE DE BREVET EUROPEEN

(45) Date de publication et mention
de la délivrance du brevet:
**10.12.2008 Bulletin 2008/50**

(51) Int Cl.:
***B64C 5/08*** *(2006.01)*

(21) Numéro de dépôt: **03291277.6**

(22) Date de dépôt: **28.05.2003**

(54) **Avion à contrôle actif du vrillage de ses ailes**

Flugzeug mit aktiver Verwindungskontrolle seiner Tragflächen

Airplane with active control of the twist of its wings

(84) Etats contractants désignés:
**AT BE BG CH CY CZ DE DK EE ES FI FR GB GR HU IE IT LI LU MC NL PT RO SE SI SK TR**

(30) Priorité: **27.06.2002 FR 0208011**

(43) Date de publication de la demande:
**02.01.2004 Bulletin 2004/01**

(73) Titulaire: **AIRBUS France
31060 Toulouse (FR)**

(72) Inventeur: **Barriety, Bernard
31100 Toulouse (FR)**

(74) Mandataire: **Bonnetat, Christian
Cabinet Bonnetat
29, rue de St. Pétersbourg
75008 Paris (FR)**

(56) Documents cités:
**US-A- 4 457 479      US-A- 4 722 499
US-A- 5 072 894      US-A- 5 988 563**

**Description**

La présente invention concerne le vrillage des ailes des avions et, notamment, le contrôle de ce vrillage en vol.

On sait que chacune des ailes d'un avion est constituée d'une pluralité de profils aérodynamiques élémentaires, respectivement calés angulairement par rapport à un axe de référence pour conférer à ladite aile un vrillage de référence. Un tel vrillage de référence est déterminé théoriquement de façon à optimiser les performances de ladite aile, notamment en ce qui concerne la répartition des charges aérodynamiques en envergure et la réduction de la traînée induite, en un point de vol bien précis, généralement choisi pour correspondre au milieu de la croisière de l'avion.

Cette technique connue de réalisation des ailes d'avion avec vrillage de référence présente de nombreux inconvénients :

1. Tout d'abord, puisque ce vrillage de référence est optimisé pour un point de vol de croisière particulier, il en résulte a contrario qu'il ne peut être optimal pour les autres points de vol et que, plus on s'éloigne des caractéristiques de ce point de vol particulier, moins les performances de l'aile sont bonnes et plus la traînée est élevée.

2. Une aile d'avion est une structure souple qui se déforme sous l'action des forces extérieures (forces aérodynamiques, forces inertielles, poussées des moteurs, ...) qui lui sont appliquées. Il en résulte que l'aile d'avion subit, en vol, des flexions et des torsions influant directement sur son vrillage, de sorte que, même audit point de vol particulier, le vrillage de référence, qui lui est spécialement associé, peut ne pas être respecté. Aux autres points de vol, ces flexions et torsions parasites, induites par la souplesse de l'avion, rendent le vrillage de référence encore moins adéquat.

3. En vol, l'aile subit des contraintes environnementales thermiques, avec des effets de déformations globales (dilatation en bloc) et des effets de déformations différentielles entre l'intrados et l'extrados, à la manière d'un bilame. Là encore, il en résulte des flexions et des torsions influençant le vrillage de l'aile.

4. Lors de la construction de l'aile, celle-ci ne se trouve évidemment pas dans les conditions régnant audit point de vol particulier. Par suite, on est obligé de déterminer par calcul un vrillage de construction, qui sera théoriquement apte à donner à ladite aile, audit point de vol particulier, ledit vrillage de référence. Cependant, quelles que soient la précision du calcul du vrillage de construction et la précision de réalisation des bâtis de construction de l'aile, il est presqu'impossible de garantir que l'aile réalisée avec ledit vrillage de construction prenne exactement le vrillage de référence --théoriquement désiré-- lorsque ladite aile se trouvera au point de vol particulier. De plus, les déformations résiduelles apparaissant lors de la libération des contraintes d'assemblage et les tolérances de fabrication de l'aile et d'assemblage de l'aile sur le fuselage de l'avion, augmentent encore la difficulté à atteindre exactement le vrillage de référence.

De ce qui précède, on comprendra aisément que la technique actuelle ne permet pas d'optimiser le vrillage d'une aile d'avion en fonction des conditions de vol de ce dernier et, par conséquent, ne permet pas d'atteindre la performance aérodynamique optimale.

La présente invention a pour objet de remédier à cet inconvénient.

A cette fin, selon l'invention, le procédé pour conférer à une aile d'avion le vrillage aérodynamiquement optimal à au moins un point de vol dudit avion, est remarquable en ce que :

- à l'extrémité libre externe de ladite aile, on articule, autour d'une ligne d'articulation au moins sensiblement parallèle à l'axe longitudinal dudit avion, au moins un plan aérodynamique additionnel, dont le bord d'attaque est disposé en flèche par rapport au bord d'attaque de ladite aile ;
- en fonction d'une pluralité de paramètres de vol influant sur le vrillage de ladite aile, on détermine un angle de pivotement optimal -en ce qui concerne ledit vrillage de l'aile- pour ledit plan aérodynamique additionnel ; et
- on impose, audit plan aérodynamique additionnel, un angle de pivotement représentatif dudit angle de pivotement optimal.

De préférence :

- en fonction de ladite pluralité de paramètres de vol influant sur le vrillage de ladite aile, on détermine de plus l'angle de calage optimal -en ce qui concerne ledit vrillage de l'aile- pour un profil aérodynamique élémentaire particulier de ladite aile ; et
- on impose, audit plan aérodynamique additionnel , un angle de pivotement représentatif dudit angle de pivotement optimal et dudit angle de calage optimal.

La présente invention est basée sur le fait que la flèche dudit plan aérodynamique additionnel étant supérieure à celle de la voilure, il en résulte un recul du centre des pressions de ce plan. Par suite, les forces aérodynamiques engendrées par celui-ci, à savoir essentiellement une portance et une traînée, exercent un moment sur ladite extrémité libre externe de l'aile, par l'intermédiaire de l'articulation la reliant audit plan. Un tel moment a pour effet une torsion de l'aile, qui influe sur le vrillage de celle-ci. Par ailleurs, à chaque position angulaire du plan aérodynamique additionnel correspond une orientations et une position desdites forces aérodynamiques, c'est-à-dire une valeur dudit moment exercé sur l'extrémité de l'aile et donc une amplitude de la torsion exercée sur l'aile. Ainsi, à chaque position angulaire dudit plan est associé, pour un point de vol particulier, un vrillage spécifique de ladite aile.

On remarquera que US-A-4722499 décrit des plans d'extrémité d'ailes rotatifs à flèche inverse. Toutefois, ces plans n'ont pas pour objet le contrôle actif du vrillage d'une aile, mais la réduction de la traînée induite et des efforts causés par les tornades de vent, ainsi que l'amélioration de l'efficacité des ailerons. Par ailleurs, US-A-5072894 et US-A-5988563 décrivent des plans d'extrémité d'ailes articulés et destinés, respectivement, à améliorer l'angle d'attaque et à accroître la portance desdites ailes, mais aucun d'eux ne concerne le contrôle actif du vrillage de ces dernières.

Conformément à la présente invention, un avion, dont chacune des ailes est constituée d'une pluralité de profils aérodynamiques élémentaires répartis selon son envergure et respectivement calés angulairement par rapport à un axe de référence dudit avion pour conférer à ladite aile un vrillage de référence, ledit avion comportant, pour chaque aile :

- au moins un plan aérodynamique additionnel, articulé à l'extrémité libre externe de ladite aile, le long d'une ligne d'articulation au moins sensiblement parallèle à l'axe longitudinal dudit avion, le bord d'attaque de chaque plan aérodynamique additionnel étant disposé en flèche par rapport au bord d'attaque de l'aile correspondante ; et
- des moyens d'actionnement aptes à faire pivoter ledit plan aérodynamique additionnel autour de ladite ligne d'articulation, est remarquable :

  - en ce qu'il comporte :

    • des moyens de commande qui, pour au moins certains points du vol dudit avion, adressent un ordre de pivotement auxdits moyens d'actionnement pour que ceux-ci imposent audit plan aérodynamique additionnel correspondant une position pivotée, lesdits moyens de commande comportant une première table apte à délivrer un premier signal représentatif d'un angle de pivotement optimal -en ce qui concerne ledit vrillage de l'aile - dudit plan aérodynamique additionnel en fonction d'une pluralité due paramètres de vol influant sur le vrillage de ladite aile; et
    • au moins un capteur pour chacun desdits paramètres, lesdits capteurs étant reliés aux entrées de ladite première table ; et

  - en ce que lesdits moyens d'actionnement reçoivent, à titre d'ordre de pivotement, ledit premier signal représentatif d'un angle de pivotement optimal délivré par lesdits moyens de commande.

Ainsi, grâce à la présente invention, ledit plan aérodynamique additionnel disposé en extrémité d'aile engendre, lorsqu'il est braqué, des forces et des moments aérodynamiques agissant sur le vrillage de l'aile. On obtient donc un contrôle actif lentement variable du vrillage de l'aile, ce qui permet :

- d'optimiser les performances de l'avion, non seulement durant toute la croisière, mais encore dans toute phase de vol dans laquelle on a intérêt à améliorer le vrillage des ailes ;
- d'augmenter la portance, notamment aux basses vitesses ;
- de régler, par de légères dissymétries de braquage pour les plans aérodynamiques additionnels de deux ailes opposées, les inévitables problèmes de dissymétrie de l'avion ; et
- de corriger, par un braquage correctif approprié, les imprécisions de construction et d'assemblage de ladite aile.

On remarquera :

- que, pour obtenir un tel contrôle actif du vrillage d'une aile, on pourrait utiliser les surfaces mobiles (ailerons, becs, volets, ...) usuellement prévus sur une aile. Cependant, il en résulterait une augmentation de traînée inacceptable ; et
- que, par exemple par le brevet allemand DE-A-2 149 956 déposé le 7 octobre 1971, on a déjà prévu d'articuler au moins un plan aérodynamique additionnel à l'extrémité de l'aile d'un avion. Toutefois, dans cette technique connue, un tel plan aérodynamique additionnel n'est utilisé que pour réduire la traînée induite par les tourbillons de bout d'aile. De toute façon, le dispositif de plan aérodynamique additionnel ne serait pas utilisable pour la mise en oeuvre de la présente invention, du fait que le bord d'attaque dudit plan est en prolongement de celui du bord d'attaque de l'aile et non pas en flèche.

Par ailleurs, il est également avantageux que le bord de fuite de chaque plan aérodynamique additionnel soit disposé en flèche par rapport au bord de fuite de l'aile correspondante.

Avantageusement, ledit plan aérodynamique additionnel peut occuper une position de déploiement pour laquelle il se trouve en prolongement de l'extrados de ladite aile. Ainsi, aux basses vitesses de l'avion, ledit plan aérodynamique additionnel peut apporter un supplément de surface portante.

Lorsque, de façon connue, l'avion comporte en bout d'aile un système de pennes (usuellement appelé "winglet" dans la technique aérodynamique) pour réduire les phénomènes tourbillonnaires d'extrémité d'aile, il est avantageux que ledit plan aérodynamique additionnel soit constitué par l'un des plans dudit système de pennes. Ainsi, on peut utiliser ledit plan pour une fonction supplémentaire, sans pour autant pénaliser aérodynamiquement l'avion.

Parmi les paramètres de vol influant sur le vrillage et intervenant dans ladite première table, on peut citer :

- le nombre de Mach, puisque les efforts aérodynamiques et leur répartition dépendent du nombre de Mach ;
- la vitesse puisque, à altitude constante, plus la vitesse augmente, plus la pression dynamique augmente, et plus le dévrillage est important ;
- l'altitude, puisque plus l'altitude augmente, plus la pression dynamique diminue à vitesse constante et moins le dévrillage sera important ;
- la position du centre de gravité de l'avion : en effet, la position de ce centre de gravité impose une répartition de la portance entre les ailes de l'avion et l'empennage horizontal arrière de celui-ci. La variation de la position du centre de gravité de l'avion pendant la croisière, due à la consommation de carburant, impose donc une variation de la répartition de la portance entre les ailes et ledit empennage horizontal ;
- la masse de l'avion et sa répartition, puisque plus la masse de l'avion est importante, plus la force de portance nécessaire à la sustentation de l'avion, et donc la flexion de l'aile et le dévrillage de celle-ci, seront grands. Par ailleurs, la masse de carburant stockée dans les réservoirs d'aile tend à contrecarrer la flexion des ailes vers le haut et tend donc à diminuer le dévrillage des ailes ;
- la température à l'extérieur et à l'intérieur de l'aile ;
- la température à l'extrados et à l'intrados de l'aile ;
- le régime des moteurs, c'est-à-dire la poussée qu'ils exercent.

Dans ce cas, on prévoit à bord de l'avion au moins un capteur pour chacun desdits paramètres et les mesures desdits capteurs sont adressées à ladite table, qui délivre alors un premier signal représentatif de l'angle de pivotement optimal. Ce signal est adressé auxdits moyens d'actionnement, qui actionnent en conséquence ledit plan aérodynamique additionnel.

Dans une variante de réalisation :

- lesdits moyens de commande comportent de plus une seconde table apte à délivrer un deuxième signal représentatif de l'angle de calage optimal --en ce qui concerne le vrillage de ladite aile-- d'un profil aérodynamique élémentaire particulier de ladite aile, en fonction de ladite pluralité de paramètres de vol mentionnés ci-dessus ;
- on prévoit, à bord dudit avion, en plus desdits capteurs reliés aux entrées de ladite seconde table, au moins un dispositif de mesure délivrant un troisième signal représentatif de la valeur actuelle dudit angle de calage dudit profil aérodynamique élémentaire particulier, et des moyens de comparaison desdits deuxième et troisième signaux ; et

- lesdits moyens d'actionnement reçoivent, à titre d'ordre de pivotement, la somme dudit premier signal et d'un signal représentatif de la comparaison entre lesdits deuxième et troisième signaux.

On obtient ainsi un asservissement en continu du vrillage de ladite aile, ledit profil aérodynamique élémentaire particulier se trouvant de préférence au voisinage de l'extrémité externe de ladite aile. Ce mode de réalisation est basé sur le fait que, ladite aile étant encastrée dans le fuselage à son emplanture, il suffit d'imposer un angle de calage à un profil aérodynamique élémentaire de ladite aile pour faire varier le vrillage de tous lesdits profils aérodynamiques élémentaires.

Le dispositif de mesure délivrant ledit troisième signal peut comporter, par exemple, un accéléromètre placé audit profil aérodynamique élémentaire particulier, dont les mesures sont comparées à celles d'un autre accéléromètre placé dans le fuselage de l'avion, ce qui permet d'obtenir le vrillage dudit profil aérodynamique élémentaire particulier.

Dans le cas où un asservissement instantané continu n'est pas indispensable, on peut prendre la moyenne, pendant une durée prédéterminée, desdits premier, deuxième et troisième signaux. On obtient alors un asservissement discontinu.

De préférence, entre lesdits moyens de comparaison et lesdits moyens d'actionnement, ledit signal représentatif de la comparaison est multiplié par un gain, que lesdits deuxième et troisième signaux soient moyennés ou pas. Un tel gain est propre à chaque avion et il signifie, si sa valeur est égale à K, qu'il faut braquer ledit plan aérodynamique additionnel de K degrés pour obtenir un vrillage de 1 degré dudit profil aérodynamique élémentaire particulier de l'aile, généralement à l'extrémité libre de celle-ci.

Quel que soit le mode de réalisation desdits moyens de commande, il est indispensable que l'ordre de pivotement transmis au plan aérodynamique additionnel soit fortement filtré pour que les mouvements de ce dernier soient lents et indépendants des perturbations de l'atmosphère et des moments de l'avion. La fréquence de filtrage doit être inférieure aux fréquences propres de l'aile. Par exemple, pour un avion gros porteur civil dont les fréquences propres sont de l'ordre de 1 hertz, la fréquence de filtrage sera bien inférieure au dixième de hertz.

Les figures du dessin annexé feront bien comprendre comment l'invention peut être réalisée. Sur ces figures, des références identiques désignent des éléments semblables.

La figure 1 est une vue en perspective, de l'avant et du dessus, d'un avion commercial conforme à la présente invention, en cours de vol.

La figure 2 est une vue schématique et partielle de cet avion, vu de l'avant.

La figure 3 est une vue schématique et partielle de cet avion, vu du dessus.

La figure 4 illustre schématiquement le vrillage des ailes de l'avion des figures 1 à 3.

La figure 5 montre, en perspective schématique et à plus grande échelle, la penne prévue à l'extrémité externe libre de chacune des ailes de l'avion des figures 1 à 3.

La figure 6 est une vue de face schématique de la figure 5.

Les figures 7, 8 et 9 sont les schémas synoptiques de trois modes de réalisation des moyens de commande en rotation de la penne des figures 5 et 6.

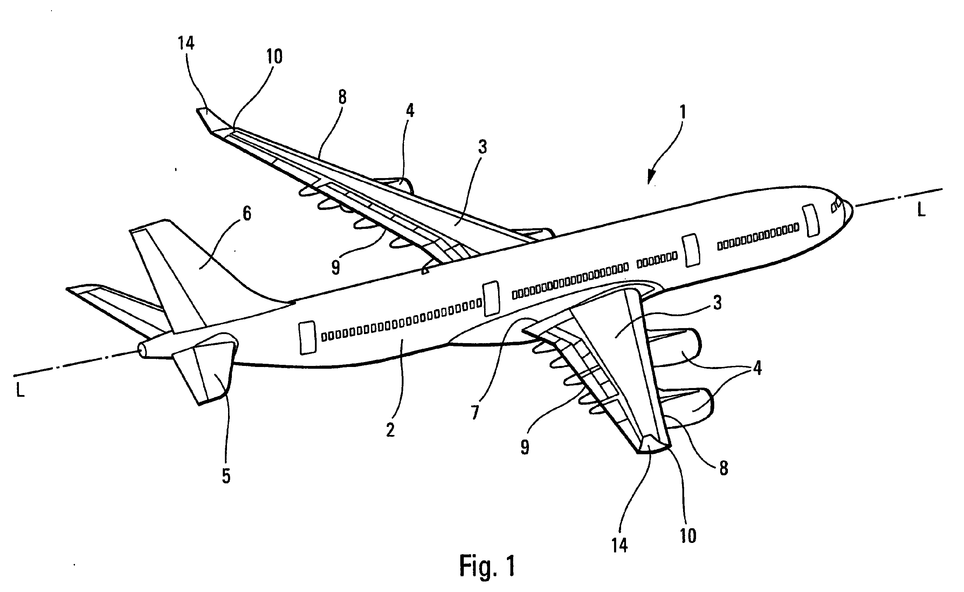

L'avion commercial gros porteur 1, conforme à la présente invention et montré schématiquement en perspective sur la figure 1, comporte un fuselage allongé 2 d'axe longitudinal L-L, deux ailes 3 symétriquement opposées par rapport audit fuselage 2, des moteurs 4 suspendus auxdites ailes 3, un empennage horizontal arrière 5 et un empennage vertical arrière 6. Les deux ailes 3 sont emplantées en 7 dans ledit fuselage 2. Chacune d'elles forme un bord d'attaque 8 vers l'avant et un bord de fuite 9 vers l'arrière. De plus, elles sont disposées en flèche par rapport au fuselage 2 et leur largeur décroît de leur emplanture 7 à leur extrémité externe 10.

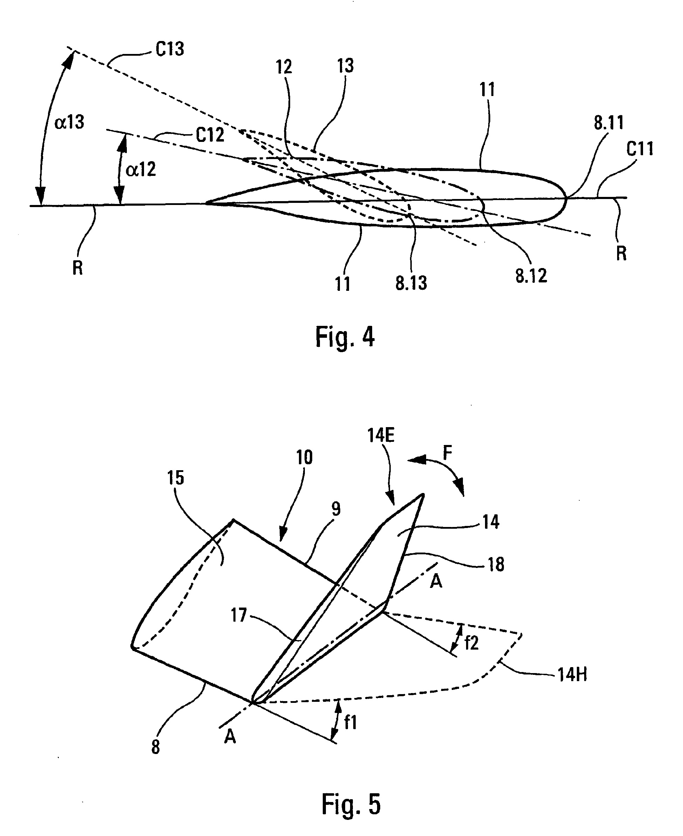

De façon connue, chacune des deux ailes 3 est constituée d'une pluralité de profils élémentaires angulairement calés par rapport à un axe de référence R-R et s'étendant selon l'envergure de l'aile 3 correspondante, de façon à conférer auxdites ailes 3 un vrillage de référence. Ce vrillage peut être caractérisé par l'angle de calage $\alpha$ que fait la corde du profil élémentaire courant avec la corde d'un profil élémentaire de base, tel que cela est illustré schématiquement sur la figure 4.

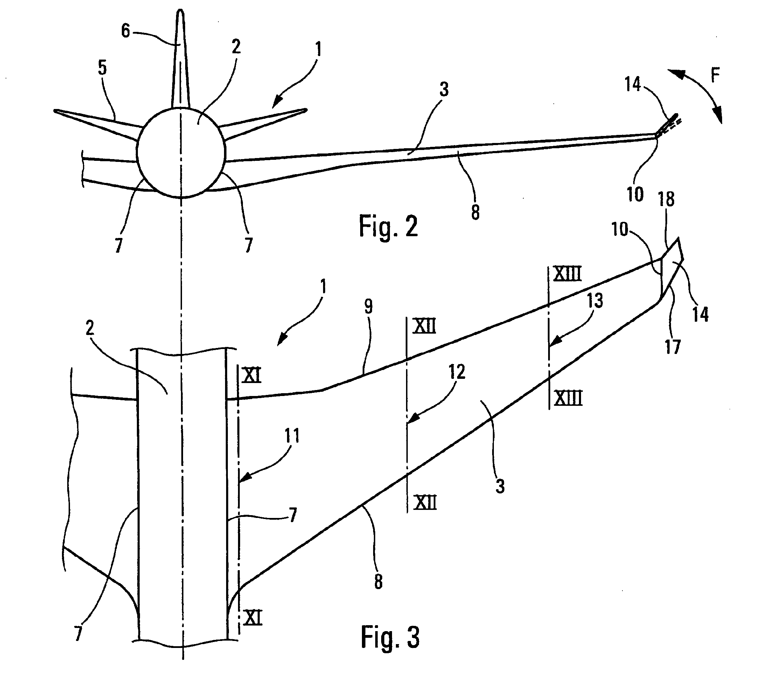

Sur cette figure 4, on n'a représenté seulement que trois tels profils élémentaires. Le premier d'entre eux, qui porte la référence 11, sert de référence de zéro au vrillage et correspond, par exemple, au profil élémentaire de ladite aile 3 au niveau de l'emplanture 7 (voir la ligne XI-XI de la figure 3). Sa corde, qui forme l'axe de référence R-R, et son bord d'attaque sont respectivement désignés par les références C11 et 8.11. Le deuxième profil élémentaire, représenté sur la figure 4 et portant la référence 12, est plus petit que le profil élémentaire 11 et se situe en position intermédiaire de l'aile correspondante, à l'emplacement de la ligne XII-XII de la figure 3. Son bord d'attaque porte la référence 8.12 et, par rapport à la corde C11 du profil élémentaire 11, la corde C12 du profil élémentaire 12 est inclinée de la valeur $\alpha$12 de l'angle de calage $\alpha$. Le troisième profil élémentaire 13, dont le bord d'attaque porte la référence 8.13, se situe au voisinage de l'extrémité externe 10 de l'aile 3 correspondante, à l'emplacement de la ligne XIII-XIII de la figure 3 et il est plus petit que le profil élémentaire 12. Par rapport à la corde C11 du profil élémentaire 11, la corde C13 du profil élémentaire 13 est inclinée de la valeur $\alpha$13 de l'angle de calage $\alpha$, plus grande que la valeur $\alpha$12.

Ainsi, chacune des ailes 3 est vrillée, depuis son emplanture (profil 11) jusqu'à son extrémité externe 10, et plus le profil élémentaire est éloigné de ladite emplanture 7, plus son bord d'attaque est orienté vers le bas.

Par ailleurs, à l'extrémité externe 10 de chacune des ailes 3, est prévue une penne 14, généralement désignée par le terme anglo-saxon "winglet" dans la technique aéronautique et destinée, de façon connue, à réduire la traînée induite par les tourbillons de bout d'aile.

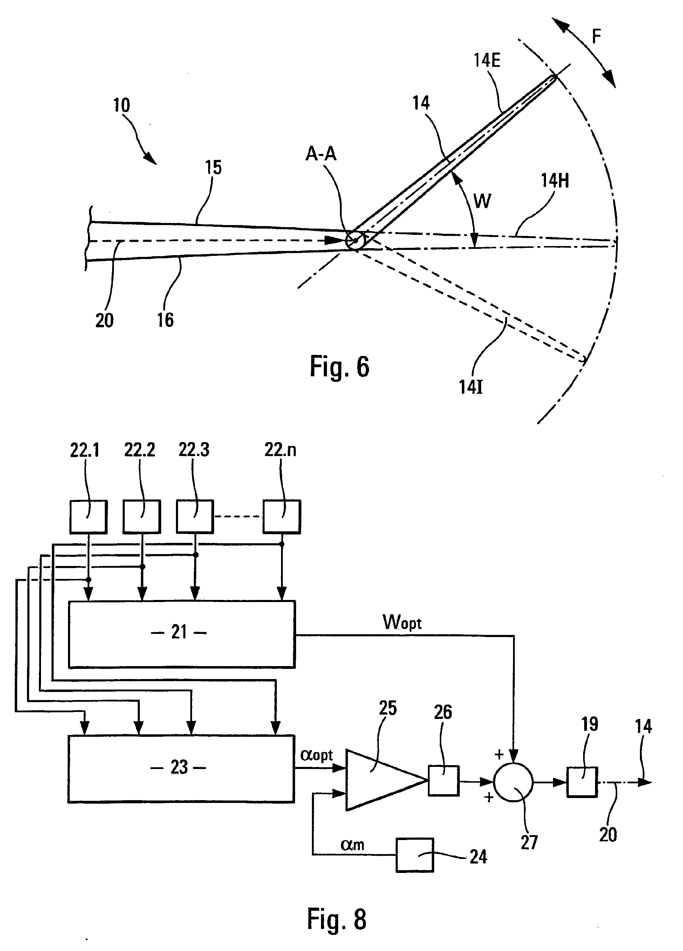

Comme cela est représenté sur les figures 5 et 6, la penne 14 est articulée, à l'extrémité externe 10 d'une aile 3, le long d'une ligne d'articulation A-A, au moins sensiblement parallèle à l'axe longitudinal L-L du fuselage 2, pour pouvoir prendre des positions pivotées 14E dirigées du côté de l'extrados 15 de l'aile 3 et, éventuellement, une position 14H en prolongement de l'aile 3 ou des positions pivotées 141 dirigées du côté de l'intrados 16 de ladite aile.

Par ailleurs, comme cela est illustré sur la figure 5, le bord d'attaque 17 de la penne 14 est disposé en flèche par rapport au bord d'attaque 8 de l'aile 3, l'angle de flèche étant désigné par f1. De même, le bord de fuite 18 de la penne 14 est disposé en flèche par rapport au bord de fuite 9 de l'aile 3, l'angle de flèche étant désigné par f2. De ce fait, comme expliqué ci-dessus, à un point de vol particulier, le centre de pression de la penne 14 est reculé, de sorte que celle-ci exerce un moment sur l'extrémité 10 de l'aile, à travers l'articulation A-A. De plus, ce moment est fonction de la valeur de l'angle W que ladite penne 14 fait avec l'aile 3.

Aussi, des moyens d'actionnement 19, par exemple du type vérin, sont reliés à la penne 14, par exemple par une tringlerie 20 (voir les figures 6 à 9), pour pouvoir la faire tourner autour de ladite ligne d'articulation A-A et faire ainsi varier ledit angle W, comme cela est illustré par la double flèche F.

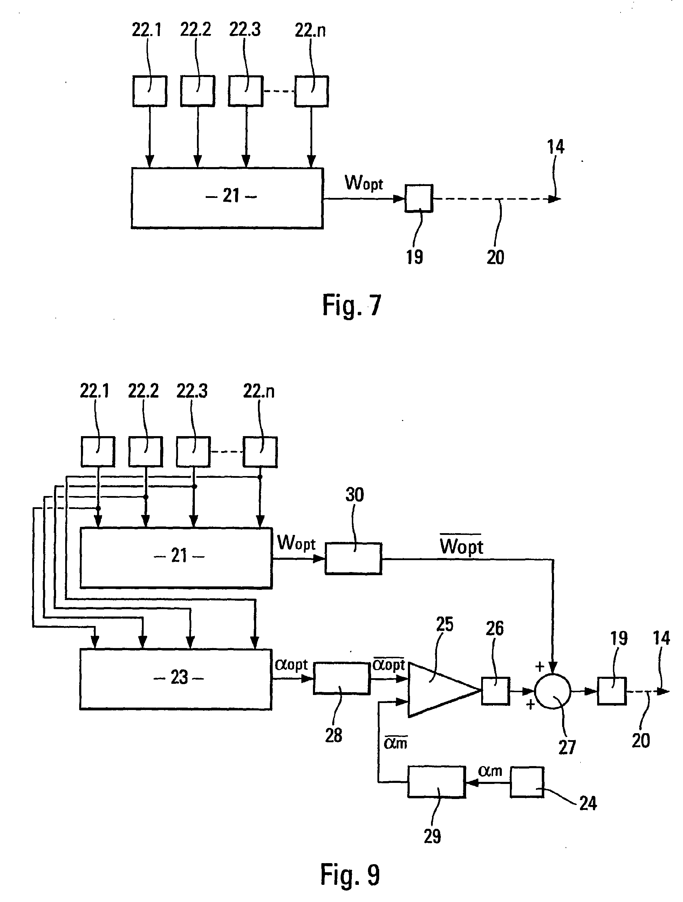

Sur la figure 7, on a représenté un premier exemple de réalisation de moyens aptes à commander les moyens d'actionnement 19, 20. Ces moyens de commande comportent essentiellement une table 21, établie par calcul ou expérimentalement, donnant une valeur optimale Wopt dudit angle W en fonction d'une pluralité de paramètres de vol, tels que ceux mentionnés ci-dessus, à savoir : nombre de Mach, altitude, position du centre de gravité, masse, répartition des masses, températures, régime moteurs. L'avion 1 comporte de plus une pluralité de capteurs 22.1 à 22.n mesurant la valeur actuelle de chacun des paramètres utilisés dans la table 21, les mesures desdits capteurs étant adressées à cette dernière. Ainsi, à chaque instant, la table 21 délivre une valeur optimale Wopt, correspondant au point de vol actuel et à la configuration de l'avion (masse, répartition des masses, ...). Cette valeur optimale Wopt est adressée aux moyens d'actionnement 19, 20, qui imposent à la penne 14 de prendre une position pivotée dudit angle Wopt. On obtient ainsi un asservissement en boucle ouverte de la position de la penne 14, et donc du vrillage de l'aile 3, en fonction du point de vol actuel de l'avion 1.

Dans le dispositif illustré par la figure 8, on retrouve la table 21, les moyens d'actionnement 19, 20 et les capteurs 22.1 à 22.n décrits ci-dessus. Dans ce dispositif, à la table 21 est associée à une autre table 23 apte à délivrer un signal αopt représentatif de la valeur optimale --en ce qui concerne le vrillage de l'aile 3-- de l'angle de calage α d'un profil aérodynamique élémentaire particulier, par exemple celui portant la référence 13 sur les figures 3 et 4, en fonction de la pluralité des paramètres de vol mesurés par les capteurs 22.1 à 22.n. De plus, ce dispositif comporte un dispositif 24 (par exemple du type mentionné ci-dessus) apte à délivrer un signal représentatif de la valeur actuelle αm dudit angle de calage de ce profil aérodynamique élémentaire particulier. Des moyens de comparaison 25 comparent les signaux αopt et αm et le résultat de la comparaison est multiplié par un gain K, propre à l'avion 1, dans un amplificateur 26, après quoi il est additionné en 27 au signal Wopt provenant de la table 21. La somme de signaux apparaissant à la sortie de l'additionneur 27 est ensuite adressée aux moyens d'actionnement 19, 20 pour la commande du plan additionnel 14.

Le dispositif de la figure 9 est semblable à celui de la figure 8, sauf en ce que des moyens 28, 29 et 30 de moyennage des signaux αopt, αm et Wopt sont respectivement disposés aux entrées des moyens de comparaison 25 et à la sortie de la table 21. Ainsi, ce sont

les signaux $\overline{\alpha opt}$, $\overline{\alpha m}$ et $\overline{Wopt}$, correspondant respectivement à la moyenne des signaux αopt, αm et Wopt sur une même durée, qui sont utilisés pour actionner le pivotement du plan aérodynamique additionnel 14.

## Revendications

1.  Procédé pour conférer à une aile d'avion (3) le vrillage aérodynamiquement optimal à au moins un point de vol dudit avion (1),
    **caractérisé en ce que :**

    - à l'extrémité libre externe (10) de ladite aile (3), on articule, autour d'une ligne d'articulation (A-A) au moins sensiblement parallèle à l'axe longitudinal (L-L) dudit avion (1), au moins un plan aérodynamique additionnel (14), dont le bord d'attaque (17) est disposé en flèche par rapport au bord d'attaque (8) de ladite aile (3) ;
    - en fonction d'une pluralité de paramètres de vol influant sur le vrillage de ladite aile (3), on détermine un angle de pivotement (Wopt) optimal
    - en ce qui concerne ledit vrillage de l'aile (3)- pour ledit plan aérodynamique additionnel (14) ; et

    - on impose, audit plan aérodynamique additionnel (14), un angle de pivotement représentatif dudit angle de pivotement optimal (Wopt).

2.  Procédé selon la revendication 1,
    **caractérisé en ce que :**

    - en fonction de ladite pluralité de paramètres de vol influant sur le vrillage de ladite aile (3), on détermine de plus l'angle de calage (αopt) optimal -en ce qui concerne ledit vrillage de l'aile (3)- pour un profil aérodynamique élémentaire particulier (13) de ladite aile (3) ; et
    - on impose, audit plan aérodynamique additionnel (14), un angle de pivotement représentatif dudit angle de pivotement optimal (Wopt) et dudit angle de calage optimal (αopt).

3.  Avion (1), permettant la mise en oeuvre du procédé de la revendication 1 et dont chacune des ailes (3) est constituée d'une pluralité de profils aérodynamiques élémentaires (11, 12, 13) répartis selon son envergure et respectivement calés angulairement par rapport à un axe de référence (R-R) dudit avion pour conférer à ladite aile un vrillage de référence, ledit avion comportant, pour chaque aile (3) :

    - au moins un plan aérodynamique additionnel (14), articulé à l'extrémité libre externe (10) de ladite aile (3), le long d'une ligne d'articulation (A-A) au moins sensiblement parallèle à l'axe longitudinal (L-L) dudit avion, le bord d'attaque (17) de chaque plan aérodynamique additionnel (14) étant disposé en flèche par rapport au bord d'attaque (8) de l'aile (3) correspondante ; et
    - des moyens d'actionnement (19, 20) aptes à faire pivoter ledit plan aérodynamique additionnel (14) autour de ladite ligne d'articulation (A-A),

    **caractérisé :**

    - **en ce qu'**il comporte :

        ■ des moyens de commande qui, pour au moins certains points du vol dudit avion, adressent un ordre de pivotement auxdits moyens d'actionnement (19, 20) pour que ceux-ci imposent audit plan aérodynamique additionnel (14) correspondant une position pivotée, lesdits moyens de commande comportant une première table (21) apte à délivrer un premier signal (Wopt) représentatif d'un angle de pivotement optimal -en ce qui concerne ledit vrillage de l'aile (3)- dudit plan aérodynamique additionnel (14) en fonction d'une pluralité de paramètres de vol influant sur le vrillage de ladite aile (3) ; et

■ au moins un capteur (22.1 à 22.n) pour chacun desdits paramètres, lesdits capteurs étant reliés aux entrées de ladite première table (21) ; et

- en ce que lesdits moyens d'actionnement (19) reçoivent, à titre d'ordre de pivotement, ledit premier signal (Wopt) représentatif d'un angle de pivotement optimal délivré par lesdits moyens de commande.

4. Avion selon la revendication 3, **caractérisé en ce que :**

- lesdits moyens de commande comportent de plus une seconde table (23) apte à délivrer un deuxième signal (αopt) représentatif de l'angle de calage optimal -en ce qui concerne le vrillage de ladite aile- d'un profil aérodynamique élémentaire particulier (13) de ladite aile (3), en fonction de ladite pluralité de paramètres de vol influant sur le vrillage de ladite aile (3), lesdits capteurs (21.1 à 22.n) étant reliés aux entrées de ladite table (23) ;
- il est prévu, à bord dudit avion, un dispositif de mesure (24) délivrant un troisième signal (αm) représentatif de la valeur actuelle dudit angle de calage dudit profil aérodynamique élémentaire particulier (13), et des moyens (25) de comparaison desdits deuxième et troisième signaux ; et
- lesdits moyens d'actionnement (19) reçoivent, à titre d'ordre de pivotement, la somme dudit premier signal (Wopt) et d'un signal représentatif de la comparaison entre lesdits deuxième et troisième signaux.

5. Avion selon la revendication 4, **caractérisé en ce que** lesdits moyens de commande comportent des moyens de moyennage (28, 29, 30) desdits premier, deuxième et troisième signaux, de sorte que lesdits moyens d'actionnement (19) reçoivent, à titre d'ordre de pivotement, la somme dudit premier signal moyenné ($\overline{\text{Wopt}}$) et d'un signal représentant la comparaison entre lesdits deuxième et troisième signaux moyennés ($\overline{\alpha\text{opt}}$ et $\overline{\alpha\text{m}}$).

6. Avion selon l'une des revendications 4 ou 5, **caractérisé en ce que** ledit profil aérodynamique élémentaire particulier 113) se trouve au voisinage de l'extrémité externe libre (10) de ladite aile (3).

7. Avion selon l'une des revendications 4 à 6, **caractérisé en ce que**, entre lesdits moyens de comparaison (25) et lesdits moyens d'actionnement (19), ledit signal représentatif de la comparaison est multiplié par un gain (26), propre audit avion.

8. Avion selon l'une des revendications 3 à 7, **caractérisé en ce que** le bord de fuite (18) de chaque plan aérodynamique additionnel (14) est disposé en flèche par rapport au bord de fuite (9) de l'aile (3) correspondante.

9. Avion selon l'une des revendications 3 à 8, **caractérisé en ce que** ledit plan aérodynamique additionnel (14) peut occuper une position de déploiement (14H) pour laquelle il se trouve en prolongement de l'extrados de ladite aile (3).

10. Avion selon l'une des revendications 3 à 9, **caractérisé en ce que** ledit plan aérodynamique additionnel (14) fait partie d'un système de pennes, prévu pour réduire les phénomènes tourbillonnaires en bout d'aile.

**Claims**

1. A process for imparting the aerodynamically optimal warp to an aircraft wing (3) at at least a flight point of said aircraft (1),
**characterized in that:**

- at the outer free end (10) of said wing (3) is articulated, about a line of articulation (A-A) at least substantially parallel to the longitudinal axis (L-L) of said aircraft (1), at least one additional aerodynamic plane (14), whose leading edge (17) is swept back with respect to the leading edge (8) of said wing (3) ;
- as a function of a plurality of flight parameters influencing the warp of said wing (3), is determined an optimal - as regards said warp of the wing (3) - angle of pivoting (Wopt) of said additional aerodynamic plane (14); and
- said additional aerodynamic plane(14) is given a pivoting angle representative of said optimal angle of pivoting (Wopt)

2. The process as claimed in claim 1, **characterized in that :**

- as a function of said plurality of flight parameters influencing the warp of said wing (3), is further determined the optimal - as regards the warp of the wing (3) - angle of setting (αopt) of a particular elementary aerodynamic profile (13) of said wing (3); and
- said additional aerodynamic plane (14) is given a pivoting angle representative of said optimal angle of pivoting (Wopt) and of said optimal angle of setting (αopt).

3. An aircraft (1), which allows the carrying out of the process of claim 1 and each of whose wings (3) consists of a plurality of elementary aerodynamic profiles (11, 12, 13) distributed along its span and respectively set angularly with respect to a reference axis (R-R) of said aircraft so as to impart a reference warp to said wing, said aircraft comprising, for each wing (3):

- at least one additional aerodynamic plane (14), articulated at the outer free end (10) of said wing (3), along a line of articulation (A-A) at least substantially parallel to the longitudinal axis (L-L) of said aircraft, the leading edge (17) of each additional aerodynamic plane (14) being swept back with respect to the leading edge (8) of the corresponding wing (3); and
- actuation means (19,20) able to pivot said additional aerodynamic plane (14) about said line of articulation (A-A)

**characterized :**
**in that** it comprises :

- control means which, for at least certain flight points of said aircraft, address a pivoting order to said actuation means (19, 20) so that the latter give said corresponding additional aerodynamic plane (14) a pivoted position, said control means comprising a first table (21) able to deliver a first signal (Wopt) representative of an optimal - as regards said warp of the wing (3) - angle of pivoting of said additional aerodynamic plane (14) as a function of a plurality of flight parameters influencing the warp of said wing (3); and
- at least one sensor (22.1 to 22.n) for each of said parameters is provided on board said aircraft, said sensors being connected to the inputs of said first table (21); and

**in that**

- said actuation means (19) receive, by way of pivoting order, said first signal (Wopt) representative of an optimal angle of pivoting delivered by said control means.

4. The aircraft as claimed in claim 3,
**characterized in that:**

- said control means furthermore comprise a second table (23) able to deliver a second signal ($\alpha$opt) representative of the optimal - as regards the warp of said wing - angle of setting of a particular elementary aerodynamic profile (13) of said wing (3), as a function of said plurality of flight parameters influencing the warp of said wing (3), said sensors (21.1 to 22.n) being connected to the inputs of said table (23);
- there is provided, on board said aircraft, a measuring device (24) delivering a third signal ($\alpha$m) representative of the current value of said angle of setting of said particular elementary aerodynamic profile (13), and means (25) for comparing said second and third signals; and
- said actuation means (19) receive, by way of pivoting order, the sum of said first signal (Wopt) and of a signal representative of the comparison between said second and third signals.

5. The aircraft as claimed in claim 4,
**characterized in that** said control means comprise means of averaging (28, 29, 30) said first, second and third signals, so that said actuation means (19) receive, by way of pivoting order, the sum of said first averaged signal ($\overline{\text{Wopt}}$) and of a signal representing the comparison between said second and third averaged signals ($\overline{\alpha\text{opt}}$ and $\overline{\alpha\text{m}}$).

6. The aircraft as claimed in one of claims 4 or 5, **characterized in that** said particular elementary aerodynamic profile (13) lies in the vicinity of the free outer end (10) of said wing (3).

7. The aircraft as claimed in one of claims 4 to 6, **characterized in that,** between said means of comparison (25) and said actuation means (19), said signal representative of the comparison is multiplied by a gain (26), specific to said aircraft.

8. The aircraft as claimed in one of claims 3 to 7, **characterized in that** the trailing edge (18) of each additional aerodynamic plane (14) is swept back with respect to the trailing edge (9) of the corresponding wing (3).

9. The aircraft as claimed in one of claims 3 to 8, **characterized in that** said additional aerodynamic plane (14) can occupy a position of deployment (14H) for which it lies directly in line with the upper face of said wing (3).

10. The aircraft as claimed in one of claims 3 to 9 , **characterized in that** said additional aerodynamic plane (14) forms part of a system of winglets, which is designed to reduce the vortices at the wing tip.

**Patentansprüche**

1. Verfahren, um einem Flügel (3) eines Flugzeugs die an mindestens einem Flugpunkt des Flugzeugs (1) aerodynamisch optimale Verwindung zu verleihen, **dadurch gekennzeichnet, dass:**

- am äußeren freien Ende (10) des Flügels (3), um eine zumindest im Wesentlichen parallel zur Längsachse (L-L) des Flugzeugs (1) verlaufende Gelenklinie (A-A) mindestens eine zusätzliche aerodynamische Fläche (14) angelenkt wird, deren Flügelvorderkante (17) bezogen auf die Flügelvorderkante (8) des Flügels (3) gepfeilt angeordnet ist;

- in Abhängigkeit von einer Vielzahl von die Verwindung des Flügels (3) beeinflussenden Flugparametern ein - hinsichtlich der Verwindung des Flügels (3) - optimaler Schwenkwinkel (Wopt) für die zusätzliche aerodynamische Fläche (14) bestimmt wird und

- der zusätzlichen aerodynamischen Fläche (14) ein für den optimalen Schwenkwinkel (Wopt) repräsentativer Schwenkwinkel zugewiesen wird.

2. Verfahren nach Anspruch 1,
**dadurch gekennzeichnet, dass:**

- in Abhängigkeit von der die Verwindung des Flügels (3) beeinflussenden Vielzahl von Flugparametern zusätzlich der - hinsichtlich der Verwindung des Flügels (3) - optimale Einstellwinkel ($\alpha$opt) für ein bestimmtes elementares aerodynamisches Profil (13) des Flügels (3) bestimmt wird und

- der zusätzlichen aerodynamischen Fläche (14) ein für den optimalen Schwenkwinkel (Wopt) und den optimalen Einstellwinkel ($\alpha$opt) repräsentativer Schwenkwinkel zugewiesen wird.

3. Flugzeug (1), das die Durchführung des Verfahrens nach Anspruch 1 ermöglicht, bei dem jeder Flügel (3) aus einer Vielzahl von elementaren aerodynamischen Profilen (11, 12, 13) besteht, die entlang seiner Spannweite verteilt und jeweils bezogen auf eine Bezugsachse (R-R) des Flugzeugs versetzt angeordnet sind, um dem Flügel eine Bezugsverwindung zu verleihen, wobei das Flugzeug für jeden Flügel (3) Folgendes umfasst:

- mindestens eine zusätzliche aerodynamische Fläche (14), die am äußeren freien Ende (10) des Flügels (3) entlang einer zumindest im Wesentlichen parallel zur Längsachse (L-L) des Flugzeugs verlaufenden Gelenklinie (A-A) angelenkt ist, wobei die Flügelvorderkante (17) jeder zusätzlichen aerodynamischen Fläche (14) bezogen auf die Flügelvorderkante (8) des entsprechenden Flügels (3) gepfeilt angeordnet ist und

- Betätigungsmittel (19, 20), die geeignet sind, die zusätzliche aerodynamische Fläche (14) um die Gelenklinie (A-A) zu verschwenken, **gekennzeichnet:**

- **dadurch, dass** es Folgendes umfasst:

■ Steuermittel, die zumindest für bestimmte Flugpunkte des Flugzeugs einen Schwenkbefehl an die Betätigungsmittel (19, 20) adressieren, damit diese der entsprechenden zusätzlichen aerodynamischen Fläche (14) eine Schwenkstellung zuweisen, wobei die Steuermittel eine erste Tabelle (21) umfassen, die geeignet ist, ein erstes Signal (Wopt) abzugeben, das für einen optimalen Schwenkwinkel - hinsichtlich der Verwindung des Flügels (3) - der zusätzlichen aerodynamischen Fläche (14) in Abhängigkeit von einer Vielzahl von die Verwindung des Flügels (3) beeinflussenden Flugparametern repräsentativ ist und

■ mindestens einen Messfühler (22.1 bis 22.n) für jeden der Parameter, wobei die Messfühler mit den Eingängen der ersten Tabelle (21) verbunden sind und

- dadurch, dass die Betätigungsmittel (19) als Schwenkbefehl das erste Signal (Wopt) empfangen, das für einen von den Steuermitteln gelieferten optimalen Schwenkwinkel repräsentativ ist.

4. Flugzeug nach Anspruch 3,
**dadurch gekennzeichnet, dass:**

- die Steuermittel zusätzlich eine zweite Tabelle (23) umfassen, die geeignet ist, ein zweites Signal ($\alpha$opt) abzugeben, das für den optimalen Einstellwinkel

- hinsichtlich der Verwindung des Flügels - eines bestimmten elementaren aerodynamischen Profils (13) des Flügels (3) in Abhängigkeit von der die Verwindung des Flügels (3) beeinflussenden Vielzahl von Flugparametern repräsentativ ist, wobei die Messfühler (21.1 bis 22.n) mit den Eingängen der Tabelle (23) verbunden sind;

- an Bord des Flugzeugs eine Messvorrichtung (24), die ein drittes Signal ($\alpha$m) liefert, das für den aktuellen Wert des Einstellwinkels des bestimmten elementaren aerodynamischen Profils (13) repräsentativ ist und Mittel (25) zum Vergleichen des zweiten und dritten Signals vorgesehen sind und

- die Betätigungsmittel (19) als Schwenkbefehl die Summe des ersten Signals (Wopt) und eines für den Vergleich zwischen dem zweiten und dritten Signal repräsentativen Signals empfangen.

5. Verfahren nach Anspruch 4,
**dadurch gekennzeichnet, dass** die Steuermittel Mittel (28, 29, 30) zur Mittelung des ersten, zweiten und dritten Signals umfassen, so dass die Betätigungsmittel (19) als Schwenkbefehl die Summe des ersten gemittelten Signals ($\overline{\text{Wopt}}$) und eines Signals, das den Vergleich zwischen dem zweiten und dritten

gemittelten Signal ($\overline{\alpha}$opt und $\overline{\alpha}$m) repräsentiert, empfangen.

6. Flugzeug nach Anspruch 4 oder 5, **dadurch gekennzeichnet, dass** das bestimmte elementare erodynamische Profil (13) sich in der Nähe des äußeren freien Endes (10) des Flügels (3) befindet.

7. Flugzeug nach einem der Ansprüche 4 bis 6, **dadurch gekennzeichnet, dass** das für den Vergleich repräsentative Signal zwischen den Vergleichsmitteln (25) und den Betätigungsmitteln (19) mit einem flugzeugeigenen Verstärkungsfaktor (26) multipliziert wird.

8. Flugzeug nach einem der Ansprüche 3 bis 7, **dadurch gekennzeichnet, dass** die Flügelhinterkante (18) jeder zusätzlichen aerodynamischen Fläche (14) bezogen auf die Flügelhinterkante (9) des entsprechenden Flügels (3) gepfeilt angeordnet ist.

9. Flugzeug nach einem der Ansprüche 3 bis 8, **dadurch gekennzeichnet, dass** die zusätzliche aerodynamische Fläche (14) eine Ausfahrposition (14H) einnehmen kann, bei welcher sie sich in Verlängerung der Oberseite des Flügels (3) befindet.

10. Flugzeug nach einem der Ansprüche 3 bis 9, **dadurch gekennzeichnet, dass** die zusätzliche aerodynamische Fläche (14) Bestandteil eines Systems von Winglets zur Verringerung der Wirbelphänomene an den Flügelenden ist.

Fig. 1

Fig. 2

Fig. 3

EP 1 375 342 B1

Fig. 4

Fig. 5

Fig. 6

Fig. 8

22.1　22.2　22.3　　22.n

$W_{opt}$

− 21 −

19　　20

14

Fig. 7

22.1　22.2　22.3　　22.n

− 21 −　$W_{opt}$　30　$\overline{W_{opt}}$

− 23 −　$\alpha_{opt}$　28　$\overline{\alpha_{opt}}$　25　26　27　19　14

$\overline{\alpha_m}$

$\alpha_m$　24

29　20

Fig. 9

**EP 1 375 342 B1**

## RÉFÉRENCES CITÉES DANS LA DESCRIPTION

**Documents brevets cités dans la description**

- US 4722499 A
- US 5072894 A
- US 5988563 A
- DE 2149956 A